# EUROPEAN PATENT APPLICATION

(11) **EP 3 902 236 A1**
(43) Date of publication of application: **27.10.2021**
(21) Application number: 19899106.9
(22) Date of filing: 23.12.2019
(51) Int. Cl.: H04N 5/225, H04N 5/232

(54) **TERMINAL, PHOTOGRAPHING METHOD, AND STORAGE MEDIUM**

(30) Priority: 21.12.2018 CN 201811573988
(71) Applicant: ZTE Corporation, Shenzhen, Guangdong 518057 (CN)
(72) Inventor: WEN, Chenguang, Shenzhen, Guangdong 518057 (CN)
(74) Representative: Swindell & Pearson Limited
(86) International application number: PCT/CN2019/127417
(87) International publication number: WO 2020/125797

(57) **Abstract**

Provided in the present disclosure are a terminal, a photographing method, and a storage medium. The terminal comprises a memory having a computer program stored thereon and a processor. The processor is configured to run the computer program to execute: determining photographing information, the photographing information comprising the position of a photographing target or a photographing angle of view; adjusting axis directions of at least two cameras comprised in the terminal according to the position of the photographing target so that the at least two cameras are focused on the photographing target; or adjusting an included angle of axis directions of at least two cameras according to the photographing angle of view; and controlling the adjusted at least two cameras to capture images.

## Description

### TECHNICAL FIELD

The present disclosure relates to, but is not limited to, the field of communication, and in particular to a terminal, a photographing method and a storage medium.

### BACKGROUND

The current photographing methods for dual-camera smartphones have enriched photographing features of mobile phones and improved the quality of images captured by the mobile phones. However, there are still some defects in these dual-camera photographing methods. As the positions and angles of two cameras on a terminal in the existing technology are fixed and unchangeable while a photography focus point is usually not in the center of a framed view (near a central axis of the camera body), the light at the center of the photography focus point usually enters the cameras sideways. With the increase of the angle of deviation between the focus point and the central axis of the camera, the locating error will also increase, which is liable to cause image distortion. Therefore, the current dual-camera photographing mode of mobile phones affects the flexibility of photography and also degrades the quality of the captured images to a certain extent.

### SUMMARY

Embodiments of the present disclosure provide a terminal, a photographing method and a storage medium to solve at least the problem of inflexibility of photography of terminals in the existing technology.

According to an embodiment of the present disclosure, there is provided a terminal, which includes: a memory having a computer program stored therein and a processor configured to execute the computer program to perform the following steps: determining photography information, where the photography information includes a position of a photography target or an angle of view for photography; adjusting axial directions of at least two cameras provided on the terminal according to the position of the photography target such that the at least two cameras focus on the photography target; or adjusting an included angle between the axial directions of the at least two cameras according to the angle of view for photography; and controlling the at least two cameras, which have been adjusted, to acquire images.

According to another embodiment of the present disclosure, there is provided a photographing method, which includes: determining photography information, where the photography information includes a position of a photography target or an angle of view for photography; adjusting axial directions of at least two cameras provided on the terminal according to the position of the photography target such that the at least two cameras focus on the photography target; or adjusting an included angle between the axial directions of the at least two cameras according to the angle of view for photography; and controlling the at least two cameras, which have been adjusted, to acquire images.

According to yet another embodiment of the present disclosure, there is also provided a storage medium having a computer program stored therein, where the computer program is configured to perform the steps of any of the above method embodiments when executed.

### BRIEF DESCRIPTION OF DRAWINGS

The drawings described here are used to provide a further understanding of the present disclosure and constitute a part of the present application. The illustrative embodiments of the present disclosure and the description thereof are used to explain the present disclosure and do not constitute an improper limitation to the present disclosure. In the drawings:
Fig. 1 is a block diagram of a terminal according to an embodiment of the present disclosure;
Fig. 2 is a flowchart of a photographing method according to an embodiment of the present disclosure;
Fig. 3 is a schematic diagram of axial directions of cameras according to an embodiment of the present disclosure;
Fig. 4 is a schematic diagram of positions of cameras according to an embodiment of the present disclosure;
Fig. 5a is a schematic front view of a flexible terminal according to an alternative embodiment of the present disclosure;
Fig. 5b is a schematic rear view of the flexible terminal according to an alternative embodiment of the present disclosure;
Fig. 5c is a schematic side view of the flexible terminal according to an alternative embodiment of the present disclosure;
Fig. 5d is a schematic side view of the flexible terminal in a bent state according to an alternative embodiment of the present disclosure;
Fig. 5e is a schematic diagram of the flexible terminal in a photographing state according to an alternative embodiment of the present disclosure;
Fig. 6a is a schematic rear view of a foldable terminal according to an alternative embodiment of the present disclosure;
Fig. 6b is a schematic diagram of the foldable terminal in a photographing state according to an alternative embodiment of the present disclosure;
Fig. 7 is a flowchart of a photographing method of a mobile terminal according to an alternative embodiment of the present disclosure;
Fig. 8 is a flowchart of taking a photo having a stereoscopic effect with a mobile terminal according to an alternative embodiment of the present disclosure;
Fig. 9 is a flowchart of taking a dynamic three-dimensional (3D) picture with a mobile terminal according to an alternative embodiment of the present disclosure;
Fig. 10 is a flowchart of taking a panoramic photo automatically with a mobile terminal according to an alternative embodiment of the present disclosure;
Fig. 11 is a schematic diagram of a state of the mobile terminal taking a panoramic photo automatically according to an alternative embodiment of the present disclosure;
Fig. 12a is a schematic diagram of an interface of a terminal showing images from two cameras in a split screen mode according to an alternative embodiment of the present disclosure;
Fig. 12b is a schematic diagram of an interface of the terminal showing an image from one single camera in a full screen mode according to an alternative embodiment of the present disclosure;
Fig. 12c is a schematic diagram of an interface of the terminal in which a picture having a stereoscopic effect is synthesized in response to a "synthesize" button being tapped according to an alternative embodiment of the present disclosure;
Fig. 12d is a schematic diagram of an interface of the terminal with a toolbar hidden in response to the image being tapped according to an alternative embodiment of the present disclosure;
Fig. 12e is a schematic diagram of a split-screen displaying interface of the terminal for taking a dynamic 3D picture according to an alternative embodiment of the present disclosure;
Fig. 12f is a schematic diagram of a single-camera image interface of the terminal for taking a dynamic 3D picture according to an alternative embodiment of the present disclosure;
Fig. 12g is a schematic diagram of a synthesized-image viewing interface of the terminal for taking a dynamic 3D picture according to an alternative embodiment of the present disclosure; and
Fig. 12h is a schematic diagram of an interface of the terminal for automatic panoramic photography according to an alternative embodiment of the present disclosure.

### DETAILED DESCRIPTION

The present disclosure will be described below in detail with reference to the accompanying drawings in conjunction with embodiments. It should be noted that combinations of the embodiments and features of the embodiments of the present application without conflict are possible.

It should be noted that the terms "first", "second", etc. in the description and the claims of the present disclosure and the above-mentioned drawings are intended to distinguish similar objects and are not necessarily to describe a specific order or sequence.

### Embodiment One

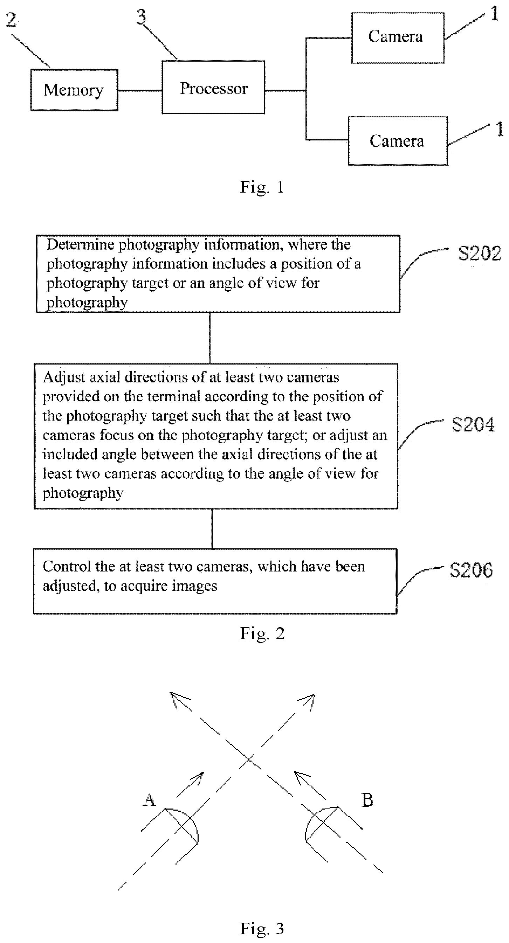

Fig. 1 is a block diagram of a terminal according to an embodiment of the present disclosure. As shown in Fig. 1, Embodiment One of the present disclosure provides a terminal, which may include: cameras 1 for acquiring images, where the terminal includes at least two cameras 1; a memory 2 having a computer program stored therein; and a processor 3 configured to execute the computer program to perform the following steps:
determining photography information, where the photography information includes a position of a photography target or an angle of view for photography;
adjusting axial directions of at least two cameras provided on the terminal according to the position of the photography target such that the at least two cameras focus on the photography target; or adjusting an included angle between the axial directions of the at least two cameras according to the angle of view for photography; and
controlling the at least two cameras, which have been adjusted, to acquire images.

According to the embodiment of the present disclosure, the axial directions of the cameras of the terminal can be controlled by the processor, so that the problem of inflexible photography with cameras of a terminal in the existing technology can be solved, thus achieving the effect of flexible photography.

It should be noted that Fig. 3 is a schematic diagram of axial directions of cameras according to an embodiment of the present disclosure. As shown in Fig. 3, the axial direction of the camera may refer to the orientation of the camera or the direction toward a photography object along a straight line where an axis of the camera is located.

It should be noted that the axial directions of the cameras focusing on the photography target may mean that the axial directions of the cameras intersect at the photography target. For example, if the photography target is a physical object, the axial directions of the cameras focusing on the photography target may mean that the axial directions of the cameras intersect at the physical object to be photographed.

The existing smartphones use a dual-camera structure with a fixed spatial arrangement and unadjustable orientation, leading to the main photography object deviating from the axial direction of the camera, which is liable to cause image distortion. In contrast, in the scheme provided in this embodiment, focusing the axial directions of the cameras on the photography target can make sure that the photography object is always in the vicinity of the main axes of the cameras, which improves the flexibility of the cameras, avoids image distortion caused by the photography subject deviating from the center of the main axes of the cameras, and improves the quality of pictures taken by the mobile phone.

In an embodiment, the processor being configured to execute the computer program to perform the step of determining photography information includes:
when the photography information includes the position of the photography target, determining the photography information including: acquiring images of the photography target after the photography target has been determined and determining the position of the photography target according to scene depth information from the images.

In an embodiment, the processor being configured to execute the computer program to perform the step of adjusting axial directions of at least two cameras according to the position of the photography target such that the at least two cameras focus on the photography target includes:
determining target axial directions of the at least two cameras when focusing on the photography target according to the position of the photography target;
determining adjustment angles of the axial directions of the at least two cameras according to the target axial directions and current axial directions of the at least two cameras; and
adjusting the current axial directions to the target axial directions of the at least two cameras based on the adjustment angles.

It should be noted that, for example, after entering a photographing mode, a user can tap on the screen to determine a photography target (a photography focus point), and by detecting the distance between the lens and the photography target, the camera can calculate the angle that the camera should form according to a built-in algorithm, that is, the target axial directions of at least two cameras when focusing on the photography target can be determined.

When the photography information includes the angle of view for photography, determining the photography information includes: determining the angle of view for photography according to a photography instruction in which the angle of view for photography is indicated.

In an embodiment, the processor being configured to execute the computer program to perform the step of adjusting an included angle between the axial directions of the at least two cameras according to the angle of view for photography includes:
determining a target included angle between the axial directions of the at least two cameras according to the angle of view for photography;
determining adjustment angles of the axial directions of the at least two cameras according to the target included angle and current included angle of the axial directions of the at least two cameras; and
adjusting the current axial directions to the target axial directions of the at least two cameras based on the adjustment angles, where an included angle between the target axial directions is the target included angle.

In an embodiment, the processor being configured to execute the computer program to perform the step of adjusting the current axial directions to the target axial directions of the cameras based on the adjustment angles, where an included angle between the target axial directions is the target included angle, includes:
adjusting the included angle between the axial directions of the at least two cameras to change continuously within a range of angle between the current included angle and the target included angle within a predetermined time.

It should be noted that, for example, if the user configures, on a display screen of the terminal, the included angle between the axial directions of two cameras in the camera array as 50°, the terminal can instruct the included angle between the axial directions of the at least two cameras included in the terminal to be set to 50° according to an instruction generated from the configuration by the user, and the processor adjusts the included angle between the axial directions of the two cameras to 50° according to the instruction. In another example, if the user selects a panoramic mode, the processor can adjust the included angle between the axial directions of the at least two cameras according to preset angles based on an instruction instructing the panoramic mode. For example, if a preset maximum included angle of the panoramic mode is 270° and the current included angle between the two cameras on the terminal is 60°, the processor controls the axial directions of the two cameras to be adjusted to a state where the included angle is 270°.

It should be noted that adjusting the included angle between the axial directions of the at least two cameras to change continuously within a range of angle between the current included angle and the target included angle within a predetermined time does not restrict the included angle to continuously changing within a continuous and uninterrupted range of angle. For example, the included angle may change from 0° to 60°; or in the panoramic mode, the included angle between the axial directions of the cameras continuously changes from 60° to 0° and then from 0° to 270° within a predetermined time, that is, may also continuously change within discrete ranges of angle.

In addition, adjusting the included angle between the axial directions of the at least two cameras to change continuously within a range of angle between the current included angle and the target included angle does not restrict the included angle to changing uniformly as a function of time within a predetermined time. For example, the included angle may uniformly increase by 5° every 1 second; or the included angle may uniformly increase by 5° in the first 1 second and then uniformly increase by 10° in the next 1 second; or after the included angle between the axial directions of the cameras has increased by 5°, the increase of the included angle may be suspended until the cameras capture images, and then the increase of the included angle resumes.

In an embodiment, the processor is further configured to execute the computer program to perform the step of:
synthesizing the images acquired by the at least two cameras to obtain a synthesized image in response to reception of a synthesis instruction.

In an embodiment, the processor being further configured to execute the computer program to perform the step of synthesizing the images acquired by the at least two cameras to obtain a synthesized image includes:
determining depth values of pixels in the images acquired by the at least two cameras; and
synthesizing the images acquired by the at least two cameras based on the depth values of the pixels according to an image processing mode to obtain a synthesized image.

In an embodiment, the processor is further configured to execute the computer program to perform the step of: outputting the images acquired by the camera array and/or the synthesized image to a display screen of the terminal.

In an embodiment, the camera array is arranged on a first side surface of the terminal, where the first side surface may be a side surface of the terminal, a side surface of a component part of the terminal, or a combined side surface formed by side surfaces of component parts of the terminal.

It should be noted that the above-mentioned side surface of the terminal can be an upper side surface, a lower side surface, a left side surface, a right side surface, a front side surface, a back side surface, etc. of the terminal or components of the terminal, and the first side surface can be any side surface of the terminal or a combined side surface composed of any side surfaces of the components of the terminal.

In an embodiment, the first side surface may conform to one of the following situations:
the terminal may include a terminal body, where the first side surface is a side surface of the terminal body; or
the terminal may include a first body and a second body connected to each other, where the first side surface is a combined side surface formed by side surfaces of the first body and the second body on the same side in a flat and unfolded state of the terminal; or
the terminal may include a first body and a second body connected to each other, where the first side surface is a side surface of the first body or a side surface of the second body.

It should be noted that the above-mentioned first side surface may be one side surface of a terminal including only one body, or may be a combined flat surface formed by side surfaces of two integral parts on the same side in a flat and unfolded state of the terminal (e.g., a folding mobile phone, a flip mobile phone, etc.) composed of the two integral parts, that is, the first side surface may be such a combined flat surface.

In an embodiment, the cameras of the camera array are distributed discretely along a periphery of the first side surface.

It should be noted that the baseline (distance between two lenses) between two lenses of the current dual-camera phones is very short, which is typically about 10 mm, while the average baseline of human eyes is 64 mm, compared with which the baseline of the current dual-camera phones is too short and therefore may cause comparatively significant calculation errors in the process of locating and image processing, and only the depth of field of close objects (shallow depth of field) can be calculated, which impose considerable restrictions on photography scenes. In an embodiment of the present application, the cameras may be distributed discretely along the periphery of the first side surface. Being distributed discretely along the periphery of the first side surface may mean that the cameras are distributed discretely (not adjacent to each other) at least in a working state (for example, when taking pictures) and are distributed near the periphery of the first side surface, which can effectively increase the length of the baseline between the cameras, improve the calculation accuracy of image depth, increase the effective range of depth of field processing of images that can be captured, and bring higher convenience and practicality to users and effectively enhance user experience.

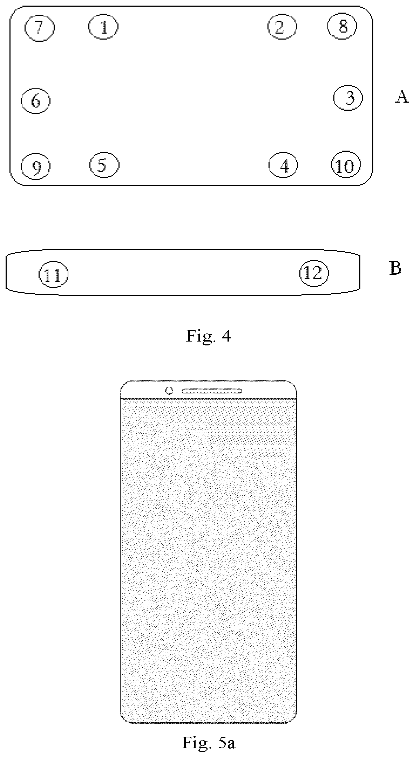

For example, as shown in Fig. 4, which is a schematic diagram of positions of cameras according to an embodiment of the present disclosure, part A may represent the front or back surface of the terminal, and part B in Fig. 4 may represent any one of the upper, lower, left and right side surfaces of the terminal. In the case where the camera array of this embodiment includes two cameras, the two cameras may be arranged at the positions of 1-2, or 4-5, or 3-6, or 7-8, or 9-10, or 1-8, or 2-7, or 4-9, or 5-10, or 8-10, or 7-9, or 2-4, or 1-5 on the front or back surface of the terminal; and when installed on any one of the upper, lower, left and right side surfaces of the terminal, the two cameras can be installed at the positions of 11-12.

When there are multiple cameras, for example, 4 cameras, provided on the terminal, the positions of the cameras may be distributed at four positions among the 1 to 10 positions that form a rectangle, for example, as shown in Fig. 4, at the positions of 7-8-9-10, or 1-2-4-5, or 7-2-9-4, or 1-8-10-5; or there may be two cameras provided in each of a horizontal direction and a vertical direction, for example at the positions of 1-5-3-6, or 2-4-3-6, or 7-9-3-6, or 8-10-3-6.

In an embodiment, the first side surface is a side surface where a display screen of the terminal is located or a side surface facing away from the side surface where the display screen is located.

It should be noted that arranging the cameras on the side of the display screen is convenient for a photographer to take a self-portrait, and does not affect view of the photographed images by the photographer, while arranging the cameras on the side facing away from the display screen is convenient for the user to view the photographed images.

In an embodiment, the terminal includes an adjusting component configured to adjust the axial directions of the cameras on the terminal.

In an embodiment, the adjusting component may include a bending structure, where the bending structure is connected to the cameras, and the bending structure is configured to directly adjust the axial directions of the cameras; or the bending structure is connected to a bearing structure that bears the cameras, and the bending structure is configured to adjust the axial directions of the cameras by adjusting a bending state of the bearing structure.

It should be noted that the bending structure may be directly connected to components of the cameras themselves to directly drive the cameras to change their axial directions. For example, the bending structure may be a rotatable structure including a shaft, a hinge or a coupling, which can directly cause a change in the orientation of the cameras. In this case, the terminal itself can keep its original state without bending.

In an embodiment of the present disclosure, the bending structure may be connected to a bearing structure for bearing the cameras. For example, if the bearing structure for bearing the cameras is some parts on the first side surface of the terminal, or if the first side surface of the terminal bears the cameras, the axial directions of the cameras can be changed by adjusting a bending state of the first side surface. For example, the bending structure may be a hinge or an articulating piece or a connecting shaft in the middle of a foldable terminal. When the hinge opens and closes or the articulating piece or connecting shaft rotates, two separate bodies of the foldable terminal are driven to open and close, and then the axial directions of the cameras arranged on the separate bodies will change.

In another example, the bending structure may be a structure supporting the bearing structure, such as a bendable plate-like member, for example, a bendable plate-like structure formed by connecting a plurality of small plate-like members to each other, and the bending state of the whole bendable plate-like structure can be adjusted by controlling inclination angles of the small plate-like members. The bending of the bending structure itself can drive the bending of the bearing structure.

In yet another example, the bearing structure bearing the cameras itself may be a bending structure, and the bending of the bending structure itself is equivalent to the bending of the bearing structure.

In an embodiment, the cameras are distributed at two sides of a bending axis of the bearing structure when the bearing structure is in a bent state.

It should be noted that the structure bearing the cameras may be the first side surface of the terminal. When the bearing structure bends, namely, changes from a flat state to a curved state, the bending line can be a boundary line that divides the bearing structure into a plurality of bending sections after bending, and when the bearing structure bends, the directions of straight lines normal to the surfaces of these bending sections will also change. For example, if the left and right halves of a surface (the bearing structure) are both bent upward to form a structure with a cross-section similar to a U-shape, the line at the bottom of the U-shaped structure can be understood as the bending line, and the bent parts on the left and right of the bending line can be understood as two bending sections separated by the bending line. For example, if a surface (the bearing structure) is bent to form a curved surface with a cross-section in a semicircular arc shape, all the straight lines in the curved surface perpendicular to the semicircular arc (that is, the straight lines in the curved surface parallel to an axis of the semi-cylindrical structure) can be understood as the bending line. In the sections on two sides of the bending line, the directions of the straight lines normal to the surface of the sections have all changed during the bending process of the bearing structure.

It should be noted that when the cameras of the camera array are distributed on two sides of the bending axis on the bearing structure, the directions of the straight lines normal to the surfaces of the bending sections on both sides of the bending line will change when the bearing structure bends, which provides the cameras of the camera array on the bearing structure with more possible orientations. For example, the axial directions of the cameras can intersect at the photography target after the bearing structure bends, so that the terminal can photograph the photography object at multiple angles at the same time, further enabling the terminal to adapt to various photographing scenes and improving the flexibility of photography.

Fig. 2 is a flowchart of a photographing method according to an embodiment of the present disclosure. As shown in Fig. 2, an embodiment of the present disclosure further provides a photographing method, which is applied to any of the above terminals, the method including:
step S202, determining photography information, where the photography information includes a position of a photography target or an angle of view for photography;
step S204, adjusting axial directions of at least two cameras provided on the terminal according to the position of the photography target such that the at least two cameras focus on the photography target; or adjusting an included angle between the axial directions of the at least two cameras according to the angle of view for photography; and
step S206, controlling the at least two cameras, which have been adjusted, to acquire images.

According to the present disclosure, the axial directions of the cameras of the camera array on the terminal can be controlled by the processor, so that the problem of inflexible photography with cameras of a terminal in the existing technology can be solved, thus achieving the effect of flexible photography.

Determining photography information includes the following situations:
when the photography information includes the position of the photography target, determining the photography information includes:
acquiring images of the photography target after the photography target has been determined and determining the position of the photography target according to scene depth information from the images; and
when the photography information includes the angle of view for photography, determining the photography information includes:
   determining the angle of view for photography according to a photography instruction in which the angle of view for photography is indicated.

In an embodiment, adjusting axial directions of at least two cameras according to the position of the photography target such that the at least two cameras focus on the photography target includes:
determining target axial directions of the at least two cameras when focusing on the photography target according to the position of the photography target;
determining adjustment angles of the axial directions of the at least two cameras according to the target axial directions and current axial directions of the at least two cameras; and
adjusting the current axial directions to the target axial directions of the at least two cameras based on the adjustment angles.

In an embodiment, adjusting an included angle between the axial directions of the at least two cameras according to the angle of view for photography includes:
determining a target included angle between the axial directions of the at least two cameras according to the angle of view for photography;
determining adjustment angles of the axial directions of the at least two cameras according to the target included angle and current included angle of the axial directions of the at least two cameras; and
adjusting the current axial directions to the target axial directions of the at least two cameras based on the adjustment angles, where an included angle between the target axial directions is the target included angle.

In an embodiment, adjusting the current axial directions to the target axial directions of the at least two cameras based on the adjustment angles, where an included angle between the target axial directions is the target included angle, includes:
adjusting the included angle between the axial directions of the at least two cameras to change continuously within a range of angle between the current included angle and the target included angle within a predetermined time.

In an embodiment, the images acquired by the at least two cameras are synthesized to obtain a synthesized image in response to reception of a synthesis instruction.

In an embodiment, synthesizing the images acquired by the at least two cameras to obtain a synthesized image includes:
determining depth values of pixels in the images acquired by the at least two cameras; and
synthesizing the images acquired by the at least two cameras based on the depth values of the pixels according to an image processing mode to obtain a synthesized image.

In an embodiment, the images acquired by the camera array and/or the synthesized image are output to a display screen of the terminal.

In an embodiment, for specific examples of this embodiment, the examples described in the above embodiments and alternative embodiments can be referred to, which will not be repeated here in this embodiment.

According to an embodiment of the present disclosure, there is also provided a storage medium having a computer program stored therein, where the computer program is configured to perform the steps of any of the above method embodiments when executed.

In this embodiment, the above storage medium may be configured to store a computer program for executing the following steps:
step S1, determining photography information, where the photography information includes a position of a photography target or an angle of view for photography;
step S2, adjusting axial directions of at least two cameras provided on the terminal according to the position of the photography target such that the at least two cameras focus on the photography target; or adjusting an included angle between the axial directions of the at least two cameras according to the angle of view for photography; and
step S3, controlling the at least two cameras, which have been adjusted, to acquire images.

In an embodiment, for specific examples of this embodiment, the examples described in the above embodiments and alternative embodiments can be referred to, which will not be repeated here in this embodiment.

Optionally, in this embodiment, the above-mentioned storage medium may include, but is not limited to, various media that can store computer programs, such as a USB flash drive, read-only memory (ROM), random access memory (RAM), mobile hard disk, magnetic disk or optical disk.

The method embodiment provided by the embodiment of the present application can be executed in a mobile terminal or a similar computing device. Taking the execution in a mobile terminal as an example, the mobile terminal may include one or more processors (the one or more processors may include but are not limited to processing devices such as a micro-control unit (MCU) or a field programmable gate array (FPGA)) and a memory for storing data. In an embodiment, the above mobile terminal may further include transmission equipment and input and output equipment for communication functions. Those having ordinary skills in the art can understand that the structure of the terminal described above is only for illustrative purpose and does not impose a limitation on the structure of the mobile terminal. For example, the mobile terminal may alternatively include more or fewer components or have different configurations.

The memory can be used to store computer programs, for example, software programs and modules of application software, such as computer programs corresponding to the photographing method in the embodiments of the present disclosure. The processor executes various functional applications and data processing by running the computer programs stored in the memory, that is, implements the above-mentioned method. The memory may include a high-speed random access memory, and may also include a non-volatile memory, such as one or more magnetic storage apparatuses, a flash memory, or other non-volatile solid-state memories. In some examples, the memory may further include memories remotely located with respect to the processor, and these remote memories may be connected to the mobile terminal through a network. Examples of the above-mentioned network include the Internet, an intranet, a local area network, a mobile communication network, and a combination thereof.

Through the description of the above embodiments, those having ordinary skills in the art can clearly understand that the method according to the above embodiments may be realized by means of software in addition to necessary general-purpose hardware platforms, and of course may also be realized by hardware, but the former is a more preferable implementation in many cases. Based on this understanding, the substance or the parts that contribute to the existing technology of the technical schemes of the present disclosure may be embodied in the form of software products, which are stored in a storage medium (such as ROM/RAM, magnetic disk, and optical disk) and include several instructions to cause a terminal device (such as a mobile phone, a computer, a server, or a network device) to perform the methods of various embodiments of the present disclosure.

### Specific Embodiment One

In order to better understand the embodiments of the present disclosure, the embodiments of the present disclosure will be further explained below in combination with application scenarios.

According to the embodiments of the present disclosure, two cameras are respectively installed at the two ends on the same side of the flexible/foldable smartphone to realize a stereoscopic photography effect with dual cameras. When taking pictures, the bending/folding angle of the phone is automatically adjusted according to the focus point of the image to be photographed, such that the two cameras are both aligned with the focus point, and the visual images and depth images of the two cameras are acquired at the same time for image processing, thus realizing three-dimensional (3D) photography of stereoscopic pictures and photography of dynamic 3D pictures by simulating the mode of human eyes.

In an embodiment of the present disclosure, the bending of the flexible phone drives the cameras at two ends of the phone to rotate, so as to simulate the eyeball movement of human eyes when observing objects and simulate the stereoscopic vision of human eyes, and the photography range of stereoscopic photos in increased by increasing the distance between the two cameras. Moreover, a photographing method of dynamic 3D photos is proposed.

In one aspect, compared with the dual-camera structure with fixed positions of existing smartphones, where the relative position relationship between the two cameras will not change with the position of the focus point, which is liable to cause the problem of image distortion when the main photography object deviates from the center of the picture, the dual cameras of the mobile phone of the present disclosure can automatically adjust the bending degree of the mobile phone and hence the position of the cameras according to the change of position of the photography object, so that the photography object is always in the vicinity of the main axes of the cameras, the flexibility of the cameras is improved, image distortion caused by the photography subject deviating from the center of the main axes of the cameras is avoided, and the quality of pictures taken by the mobile phone is improved.

In another aspect, with respect to the problem that the distance between the two cameras of the existing dual-camera smartphones is short, which leads to considerable calculation errors and a defect that only the depth of field of close objects can be calculated, the distance between the two cameras of the flexible screen/foldable phone of the present disclosure adopts a large distance simulating the angle of view of human eyes.

In addition, according to the embodiments of the present disclosure, dynamic 3D pictures can be taken at a close distance with the large disparity of the two cameras of the flexible screen/foldable phone, generating photos of 3D scenes that can be viewed rotationally within a certain range of angle, thus improving the authenticity of the photos and adding more fun to photography.

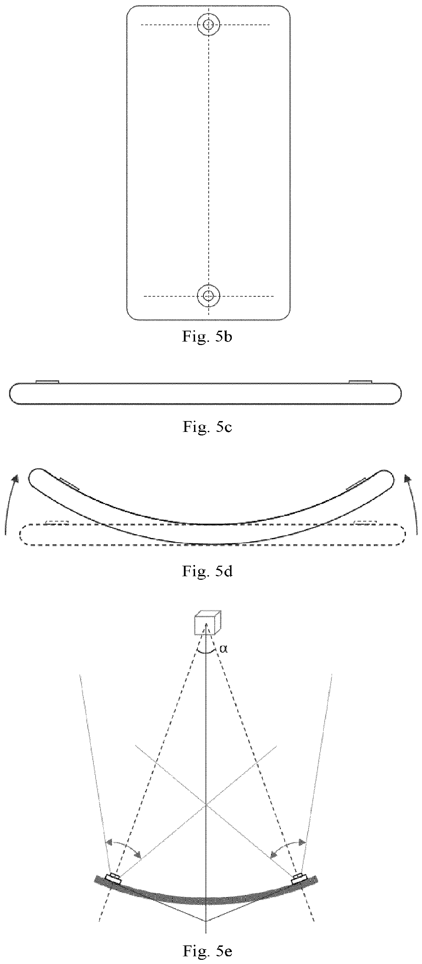

Figs. 5a to 6b provide schematic diagrams for structures and photographing states of a flexible terminal and a foldable terminal. As shown in Figs. 5a to 6b, the screen of the flexible/foldable smartphone has the characteristic of being bendable, and the two cameras are installed at different positions, respectively, on the back of the phone. In the flexible phone, as shown in Fig. 5b, a first camera is installed in the upper half of the phone and the second camera is installed in the lower half of the phone, and the two cameras are on the same vertical line. Since the flexible phone or the flexible terminal is bendable, the relative positions of the two cameras will change with the bending of the screen of the phone. The bending process is schematically shown in Figs. 5c and 5d. In the foldable phone, the two cameras are respectively installed at top positions of left and right screens of the foldable phone, and the positions of the cameras change with the folding movement of the screens, as shown in Fig. 5e. The bending mode of the flexible mobile phone screen is not limited to synchronous bending or the same bending degree of the two halves. The bending degree of each part of the flexible screen will vary with the different preset modes and the change of photography scenes and conditions and may be automatically adjusted according to instructions.

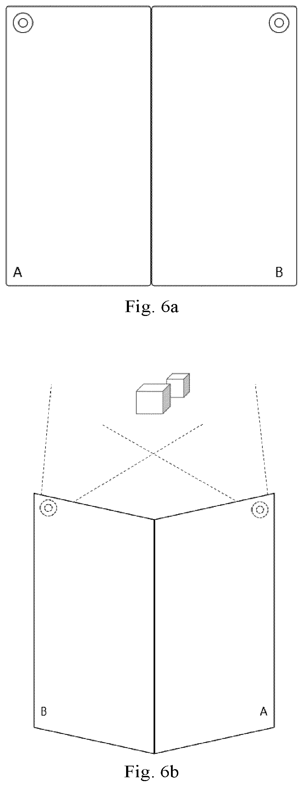

Figs. 6a and 6b are schematic diagrams of the structure of a foldable phone, in which two cameras are arranged at the upper left corner and the upper right corner of the back of the foldable phone, and the folding mode of the foldable phone also adopts different folding mechanisms according to the different conditions of photography scenes. For example, take the back side of the foldable terminal shown in Fig. 6a as an example, there may be the following folding methods: folding screen B with screen A as a reference; folding screen A with screen B as a reference; screens A and B are folded synchronously; and screens A and B are folded and rotated asynchronously.

The embodiments of the present disclosure mainly relate to a photographing method of a terminal with a flexible/foldable screen, and a mobile terminal with a flexible/foldable screen, where cameras are respectively installed at different positions on the back of the flexible/foldable phone. When photographing, a focus point is set, and the two cameras find views respectively and calculate the scene depth in the images in real time. The bending degree of each section of the flexible screen/folding screen is automatically adjusted in real time according to the distance between the focus point and the cameras of the mobile phone, so as to align the two cameras with the focus point of the image. The first camera and the second camera capture images at the same time to obtain a photographed picture and depth values of the photographed scene. The picture is then subject to image processing according to a preset image processing mode. Thus, the photography of photos with stereoscopic effects and dynamic 3D photos is achieved by simulating the mode of human eyes.

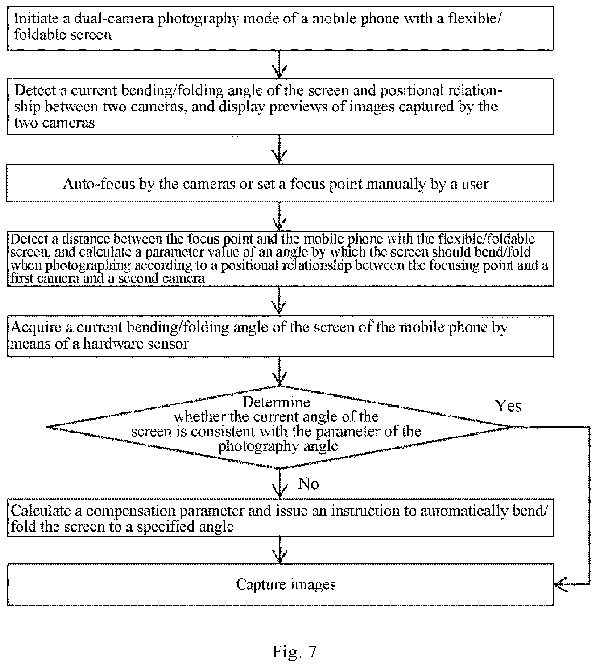

The schematic diagram of a photographing process is shown in Fig. 7. Fig. 7 is a flowchart of a photographing method of a mobile terminal according to an alternative embodiment of the present disclosure. As the first camera and the second camera of the flexible/foldable phone simulate the stereoscopic vision mode of human eyes with a relatively large distance between the cameras, a large disparity can support the calculation of the scene depth values in a large range, and can support stereoscopic photography effect processing at a long distance. Moreover, by controlling the screen so as to adjust the angle of view for photography of the cameras, the main optical axes of the cameras can be aligned with the photography focus point, so that the imaging area of the photography object is in the vicinity of the main axes of the cameras, which avoids the image distortion caused by the photography subject deviating from the center of the picture and improves the quality of the picture.

When the photography object is relatively far away from the cameras (within the maximum stereoscopic image photography range), photos with stereoscopic effects, such as bokeh, multipoint focusing and other stereoscopic effects can be taken. Dynamic 3D photos can be taken when shooting at a close range. With a large difference between the photographing angle of the two cameras, the acquisition of dynamic 3D images is enabled, where a depth map of the photography scene is calculated, to reconstruct a 3D scene within the photography range and generate a dynamic 3D picture that can be viewed rotationally within a certain range of angle.

A specific photography implementation process is shown in Fig. 7, which includes: initiating a dual-camera photography mode of a mobile phone with a flexible/foldable screen; detecting a current bending/folding angle of the screen and positional relationship between two cameras, and displaying previews of images captured by the two cameras; auto-focusing by the cameras or setting a focus point manually by a user; detecting a distance between the focus point and the mobile phone with the flexible/foldable screen, and calculating a parameter value of an angle by which the screen should bend/fold when photographing according to a positional relationship between the focusing point and a first camera and a second camera; acquiring a current bending/folding angle of the screen of the mobile phone by means of a hardware sensor; determining whether the current angle of the screen is consistent with the parameter of the photography angle; if it is consistent, capturing images directly; or if not consistent, calculating a compensation parameter and issuing an instruction to automatically bend/fold the screen to a specified angle, and then capturing images.

This photographing method has a variety of application scenarios, among which three typical application scenarios are: taking photos with stereoscopic effects at a long distance, taking dynamic 3D photos at a short distance, and taking panoramic photos automatically.

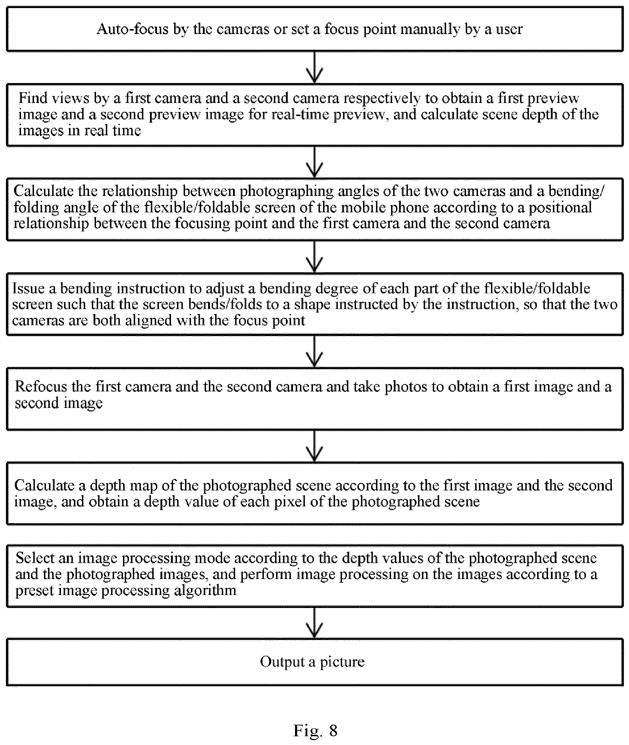

The implementation process of taking a photo with stereoscopic effects is shown in Fig. 8. Fig. 8 is a flowchart of taking a photo having a stereoscopic effect with a mobile terminal according to an alternative embodiment of the present disclosure. The process includes: auto-focusing by the cameras or setting a focus point manually by a user; finding views by a first camera and a second camera respectively to obtain a first preview image and a second preview image for real-time preview, and calculating scene depth of the images in real time; calculating a bending/folding angle by which the flexible/foldable screen of the mobile phone should bend/fold based on a preset algorithm according to a positional relationship between the focusing point and the first camera and the second camera; issuing a bending instruction to adjust a bending degree of each part of the flexible/foldable screen such that the screen bends/folds to a shape instructed by the instruction, so that the two cameras are both aligned with the focus point; refocusing the first camera and the second camera and taking photos to obtain a first image and a second image; calculating a depth map of the photographed scene according to the first image and the second image, and obtaining a depth value of each pixel of the photographed scene; selecting an image processing mode according to the depth values of the photographed scene and the photographed images, and performing image processing on the images according to a preset image processing algorithm; and outputting a picture.

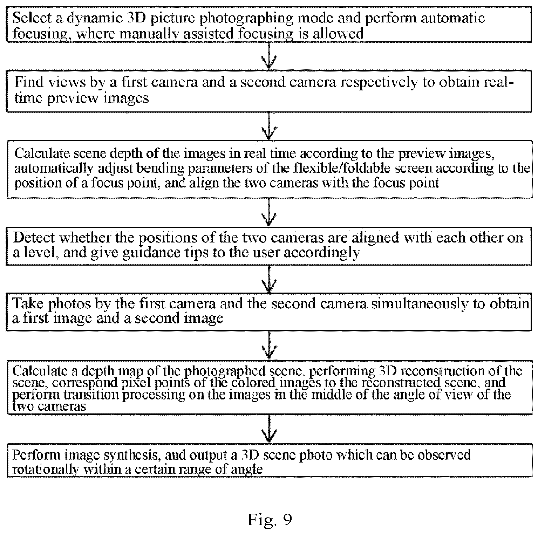

The implementation process of taking a dynamic 3D photo is shown in Fig. 9. Fig. 9 is a flowchart of taking a dynamic 3D picture with a mobile terminal according to an alternative embodiment of the present disclosure. The process includes: selecting a dynamic 3D picture photographing mode and performing automatic focusing, where manually assisted focusing is allowed; finding views by a first camera and a second camera respectively to obtain real-time preview images; calculating scene depth of the images in real time according to the preview images, automatically adjusting bending parameters of the flexible/foldable screen according to the position of a focus point, and aligning the two cameras with the focus point; detecting whether the positions of the two cameras are aligned with each other on a level, and giving guidance tips to the user accordingly; taking photos by the first camera and the second camera simultaneously to obtain a first image and a second image; calculating a depth map of the photographed scene, performing 3D reconstruction of the scene, corresponding pixel points of the colored images to the reconstructed scene, and performing transition processing on the images in the middle of the angle of view of the two cameras; and performing image synthesis, and outputting a 3D scene photo which can be observed rotationally within a certain range of angle.

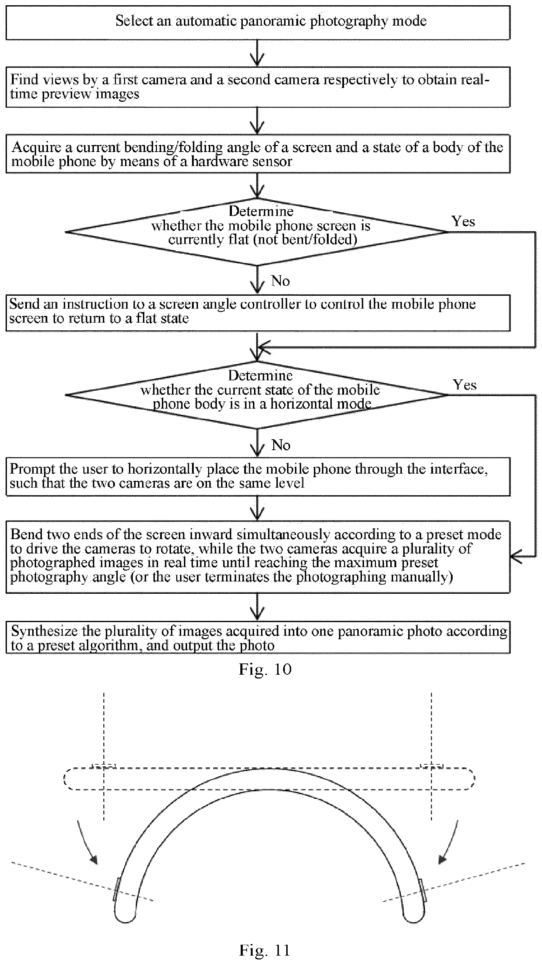

The implementation process of an automatic panoramic photography mode is shown in Fig. 10. Fig. 10 is a flowchart of taking a panoramic photo automatically with a mobile terminal according to an alternative embodiment of the present disclosure. The state of the terminal during photographing is shown in Fig. 11. Fig. 11 is a schematic diagram of a state of the mobile terminal taking a panoramic photo automatically according to an alternative embodiment of the present disclosure. The process includes: selecting an automatic panoramic photography mode; finding views by a first camera and a second camera respectively to obtain real-time preview images; acquiring a current bending/folding angle of a screen and a state of a body of the mobile phone by means of a hardware sensor; determining whether the mobile phone screen is currently flat (not bent/folded), and sending an instruction to a screen angle controller to control the mobile phone screen to return to a flat state if the screen is in a non-flat state; otherwise, proceeding to the next step; determining whether the current state of the mobile phone body is in a horizontal mode, and if not in the horizontal mode, prompting the user to horizontally place the mobile phone through the interface, such that the two cameras are on the same level; otherwise, proceeding to the next step; bending two ends of the screen inward simultaneously according to a preset mode to drive the cameras to rotate, while the two cameras acquire a plurality of photographed images in real time until reaching the maximum preset photography angle (or the user terminates the photographing manually); and synthesizing the plurality of images acquired into one panoramic photo according to a preset algorithm, and outputting the panoramic photo.

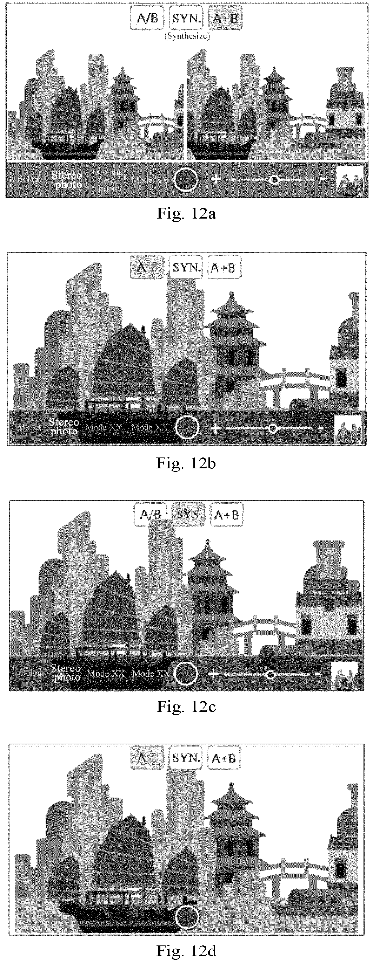

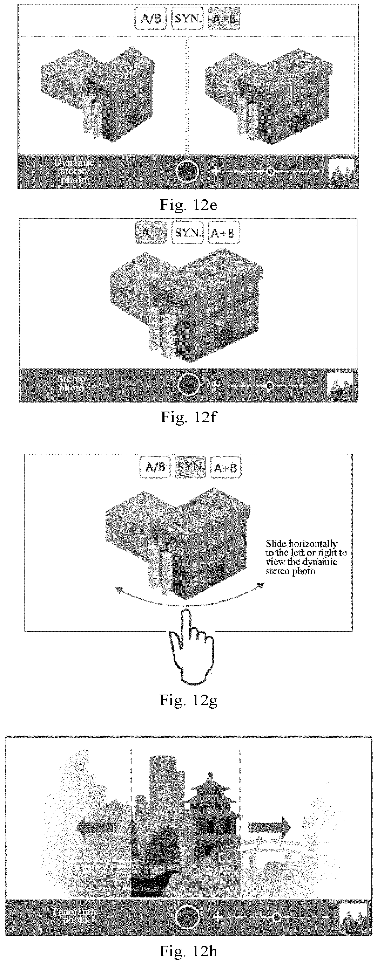

In the user interface, the function of the button "A+B" is to display images from two cameras simultaneously in a split screen, which is shown in Fig. 12a; the function of the button "A/B" is to display an image from one single camera in a full screen, which is shown in Fig. 12b; and the function of the button "Synthesize" is to synthesize the images captured by the two cameras according to the selected photographing mode, which is shown in Fig. 12c. During photographing, the toolbar in the interface can be hidden to improve the visual experience, as shown in Fig. 12d. The user interfaces for taking stereoscopic photos are shown in Figs. 12e to 12g, in which Fig. 12e is a schematic diagram of a split-screen displaying interface of the terminal for taking a dynamic 3D picture according to an alternative embodiment of the present disclosure, Fig. 12f is a schematic diagram of a single-camera image interface of the terminal for taking a dynamic 3D picture according to an alternative embodiment of the present disclosure, and Fig. 12g is a schematic diagram of a synthesized-image viewing interface of the terminal for taking a dynamic 3D picture according to an alternative embodiment of the present disclosure, where, after completing the photography of a dynamic stereo picture, photography scenes from different angles of the stereo picture can be viewed within a certain range of angle by sliding horizontally to the left or right on the screen.

The user interface during a panoramic photography operation is shown in Fig. 12h. Fig. 12h is a schematic diagram of an interface of the terminal for automatic panoramic photography according to an alternative embodiment of the present disclosure.

According to the embodiments of the present disclosure, with a flexible screen, cameras can rotate along with the screen, thus simulating the principle of stereoscopic vision of human eyes. By simulating a human eyeball moving with an observed object, image distortion of the photography subject is reduced and the picture quality is improved compared with the existing cameras. By increasing the distance between two cameras to simulate the binocular disparity of human eyes, the measurement accuracy of the depth of the photography scene can be improved, the stereoscopic effects of the stereoscopic picture taken are stronger, and the photography distance for the stereoscopic picture is also increased. By taking advantage of the large photography disparity of dual cameras, dynamic 3D scene photos can be captured and synthesized at a close range, realizing 3D scene viewing within a certain range of angle. Automatic panoramic photography with two cameras is realized in a manner that avoids the problem of unstable picture quality caused by manually rotating the mobile phone, and the two cameras capture images to the left and right sides at the same time, which improves the photography efficiency.

Obviously, those having ordinary skills in the art should understand that the above modules or steps of the present disclosure may be implemented by a general-purpose computing device and may be concentrated in one single computing device or distributed in a network composed of a plurality of computing devices, and in one embodiment, may be implemented by program codes executable by a computing device, so that they can be stored in a storage device and executed by the computing device. Moreover, in some cases, the steps shown or described herein can be performed in a different order, or they can be made into individual integrated circuit modules, or a plurality of the modules or steps can be made into one single integrated circuit module. As such, the present disclosure is not limited to any particular combination of hardware and software.

The above is only the description of preferred embodiments of the present disclosure and is not intended to limit the present disclosure. It will be apparent to those having ordinary skills in the art that various modifications and variations can be made to the present disclosure. Any modifications, equivalent substitutions, improvements, etc. made within the principle of the present disclosure shall fall within the scope of protection of the present disclosure.

## Claims

1. A terminal, comprising: a memory storing a computer program and a processor configured to execute the computer program to perform steps of:
determining photography information, wherein the photography information comprises a position of a photography target or an angle of view for photography;
adjusting axial directions of at least two cameras provided on the terminal according to the position of the photography target such that the at least two cameras focus on the photography target; or adjusting an included angle between the axial directions of the at least two cameras according to the angle of view for photography; and
controlling the at least two cameras, which have been adjusted, to acquire images.

2. The terminal of claim 1, wherein the processor being configured to execute the computer program to perform the step of determining photography information comprises:
in a situation where the photography information comprises the position of the photography target, acquiring images of the photography target after the photography target has been determined and determining the position of the photography target according to scene depth information from the images; and
in a situation where the photography information comprises the angle of view for photography, determining the angle of view for photography according to a photography instruction in which the angle of view for photography is indicated.

3. The terminal of claim 1, wherein the processor being configured to execute the computer program to perform the step of adjusting axial directions of at least two cameras according to the position of the photography target such that the at least two cameras focus on the photography target comprises:
determining target axial directions of the at least two cameras when focusing on the photography target according to the position of the photography target;
determining adjustment angles of the axial directions of the at least two cameras according to the target axial directions and current axial directions of the at least two cameras; and
adjusting the current axial directions to the target axial directions of the at least two cameras based on the adjustment angles.

4. The terminal of claim 1, wherein the processor being configured to execute the computer program to perform the step of adjusting an included angle between the axial directions of the at least two cameras according to the angle of view for photography comprises:
determining a target included angle between the axial directions of the at least two cameras according to the angle of view for photography;
determining adjustment angles of the axial directions of the at least two cameras according to the target included angle and current included angle of the axial directions of the at least two cameras; and
adjusting the current axial directions to the target axial directions of the at least two cameras based on the adjustment angles, wherein an included angle between the target axial directions is the target included angle.

5. The terminal of claim 4, wherein the processor being configured to execute the computer program to perform the step of adjusting the current axial directions to the target axial directions of the cameras based on the adjustment angles, wherein an included angle between the target axial directions is the target included angle, comprises:
adjusting the included angle between the axial directions of the at least two cameras to change continuously within a range of angle between the current included angle and the target included angle within a predetermined time.

6. The terminal of claim 1, wherein the processor is further configured to execute the computer program to perform steps of:
determining depth values of pixels in the images acquired by the at least two cameras in response to reception of a synthesis instruction; and
synthesizing the images acquired by the at least two cameras based on the depth values of the pixels according to an image processing mode to obtain a synthesized image.

7. The terminal of claim 1, further comprising:
an adjusting component configured to adjust the axial directions of the at least two cameras.

8. The terminal of claim 7, wherein the adjusting component comprises a bending structure, wherein the bending structure is connected to the cameras, and the bending structure is configured to directly adjust the axial directions of the cameras; or the bending structure is connected to a bearing structure that bears the cameras, and the bending structure is configured to adjust the axial directions of the cameras by adjusting a bending state of the bearing structure.

9. The terminal of claim 8, wherein the at least two cameras are distributed at two sides of a bending axis of the bearing structure when the bearing structure is in the bending state.

10. The terminal of claim 1, wherein the at least two cameras are arranged on a first side surface of the terminal, wherein the first side surface is a side surface of the terminal, a side surface of a component part of the terminal, or a combined side surface formed by respective side surfaces of a plurality of component parts of the terminal.

11. The terminal of claim 10, wherein
the terminal comprises a terminal body, wherein the first side surface is a side surface of the terminal body; or
the terminal comprises a first body and a second body connected to each other, wherein the first side surface is a combined side surface formed by respective side surfaces of the first body and the second body on the same side in a flat and unfolded state of the terminal; or
the terminal comprises a first body and a second body connected to each other, wherein the first side surface is a side surface of the first body or a side surface of the second body.

12. The terminal of claim 10 or claim 11, wherein the cameras of the camera array are distributed discretely along a periphery of the first side surface.

13. The terminal of claim 10 or claim 11, wherein the first side surface is a side surface where a display screen of the terminal is located or a side surface facing away from the side surface where the display screen is located.

14. A photographing method applied to the terminal of any one of claims 1 to 13, the method comprising:
determining photography information, wherein the photography information comprises a position of a photography target or an angle of view for photography;
adjusting axial directions of at least two cameras provided on the terminal according to the position of the photography target such that the at least two cameras focus on the photography target; or adjusting an included angle between the axial directions of the at least two cameras according to the angle of view for photography; and
controlling the at least two cameras, which have been adjusted, to acquire images.

15. The photographing method of claim 14, wherein the step of determining the photography information comprises:
in a situation where the photography information comprises the position of the photography target, acquiring images of the photography target after the photography target has been determined and determining the position of the photography target according to scene depth information from the images; and
in a situation where the photography information comprises the angle of view for photography, determining the angle of view for photography according to a photography instruction in which the angle of view for photography is indicated.

16. The photographing method of claim 14, wherein the step of adjusting axial directions of at least two cameras according to the position of the photography target such that the at least two cameras focus on the photography target comprises:
determining target axial directions of the at least two cameras when focusing on the photography target according to the position of the photography target;
determining adjustment angles of the axial directions of the at least two cameras according to the target axial directions and current axial directions of the at least two cameras; and
adjusting the current axial directions to the target axial directions of the at least two cameras based on the adjustment angles.

17. The photographing method of claim 14, wherein the step of adjusting an included angle between the axial directions of the at least two cameras according to the angle of view for photography comprises:
determining a target included angle between the axial directions of the at least two cameras according to the angle of view for photography;
determining adjustment angles of the axial directions of the at least two cameras according to the target included angle and current included angle of the axial directions of the at least two cameras; and
adjusting the current axial directions to the target axial directions of the at least two cameras based on the adjustment angles, wherein an included angle between the target axial directions is the target included angle.

18. The photographing method of claim 17, wherein the step of adjusting the current axial directions to the target axial directions of the at least two cameras based on the adjustment angles, wherein an included angle between the target axial directions is the target included angle, comprises:
adjusting the included angle between the axial directions of the at least two cameras to change continuously within a range of angle between the current included angle and the target included angle within a predetermined time.

19. The photographing method of claim 14, further comprising:
determining depth values of pixels in the images acquired by the at least two cameras in response to reception of a synthesis instruction; and
synthesizing the images acquired by the at least two cameras based on the depth values of the pixels according to an image processing mode to obtain a synthesized image.

20. A storage medium storing a computer program, wherein the computer program is configured, when executed, to perform the method of any one of claims 14 to 19.
